# EUROPEAN PATENT APPLICATION

(11) **EP 1 231 699 A1**
(43) Date of publication of application: **14.08.2002**
(21) Application number: 00971728.1
(22) Date of filing: 01.11.2000
(51) Int. Cl.: H02J 17/00, H02J 7/34, G01S 13/75

(54) **POWER SOURCE AND SENSOR DEVICE COMPRISING THE SAME**

(30) Priority: 02.11.1999 JP 31180099
(71) Applicant: Integrated Business CO., Ltd., Kawasaki-shi, Kanagawa 213-0012 (JP); Yamamoto, Shigeo, Chigasaki-shi, Kanagawa 253-0053 (JP)
(72) Inventor: YAMAMOTO, Shigeo, Chigasaki-shi, Kanagawa 253-0053 (JP); ARIMURA, Kunitaka, Integrated Business Co., Ltd., Kawasaki-shi, Kanagawa 213-0012 (JP)
(74) Representative: Leson, Thomas Johannes Alois, Dipl.-Ing.
(86) International application number: JP0007705
(87) International publication number: WO0133694

(57) **Abstract**

A power source and a sensor device comprising this power source device, in which vibrational energy travelling in the space is utilized as an energy source and which can be used for a long time of period and supplies more stable power. The power source for supplying power to a load comprises a coupler (310) for receiving the vibrational travelling in the space and an electric double layer capacitor (341) for storing therein the vibrational energy received by the coupler as electric power.

## Description

### Background of the Invention

### 1. Field of the Invention

This invention relates to a sensor device that is provided with a vibration-emitting device that emits vibrations through the air, a response device that receives vibrations and then transmits a response signal, and a response-signal receiving device that receives a response signal and collates it.

### 2. Description of the Prior Art

In general, a units such as this that is used as a sensor devices for a door-lock release of an entrance control system and the like generally are provided with an emitting device that emits vibrations such as electromagnetic waves, sound waves, and light waves in a fixed, controlled space. The response device that receives these vibrations and then transmits a response signal, and the response-signal receiving device that receives the response signal and collates this signal, were already known. In the construction of such a sensor device, for example, a distinction device based on an active element mentioned in Japanese Examined Patent Publication No. S58-57796 or a no contact sensor system mentioned in Japanese Unexamined Patent Publication No. S58-151572 is employed.

A means of maintaining the electric power that is needed to emit the response signals is the most essential element in the response device in such sensor equipment.

The sensor device mentioned in said Japanese Unexamined Patent Publication No. S58-151572 suffers from the inconvenience that the device's active operative time is limited due to the limited life of the device's internal battery, even though the internal battery enables the device to maintain a good level of constant power.

The sensor device in said Japanese Examined Patent Publication No. S58-57796, there is no special power source, because the vibrations have been accumulated as energy in a capacitor so as to serve as electric power.

### Summary of the Invention

### 1. Problems to be solved by the Invention

The electric power accumulated in the aforementioned capacitor will be discharged instantly whenever the power is used. Therefore, if a power loss occurs in a circuit, the lack of power results in no response signal being emitted.

The objective of this invention is to supply a sensor device with power by using a power-generating device that transfers vibrations through the air and thereby serves as a source of electricity, which enables the sensor device to have stable power over a long period of time, thereby solving the problem mentioned above.

### 2. Means of Solving the Problems

The invention mentioned in Claim 1 is a power device characterized such that it provides power to the load and has (1) a coupler that receives electro-magnetic vibrations transferred through the space and (2) an electric double-layer capacitor for accumulating as electric power the vibrations received from said coupler.

The electric double-layer capacitor is a type of secondary battery that enables repeated recharging because it has static capacitance (0.1 to several farads) that is enormously larger than that of a general capacitor, which discharges power instantly. Concretely, the electrode itself has the characteristic of easily being electrolyzed, and the electrodes have no relationship with the ionization tendency. A spacer is located between the electrodes, enabling only small ion(s) to pass through its holes.

As an example, a polypropylene-type material is used as the spacer, and sulfuric acid is used as the electrolyte.

Recently, as a result of research and development concerning a wide range of electric double-layer capacitors, a low-ESR laminate-type capacitor several millimeters thick has been used.

As mentioned in Claim 1, the power device of the present invention is provided with (a) a sensor that comprises a coil that receives the vibrations transferred through the air, and (b) an electric double-layer capacitor that stores the electric power that is converted from the vibrations received by said sensor. Therefore, it can be used over a long period of time as a source of electric energy that is converted from said vibrations transferred through the air.

Because the electric double-layer capacitor has the merits of being capable of comparatively rapid electric charging, as well as being able to instantly store a much larger amount of electric power than can be stored by other general capacitors, it can store as electric power the vibrations received from the coil of the aforementioned sensor and therefore can supply a stable flow of electric power to the load.

The invention mentioned in the second request paragraph is a power device characterized such that it provides (1) a power regulator that regulates the output voltage of said electric double-layer capacitor, and (2) a secondary battery that is connected to said electric double-layer capacitor via said power regulator, with the load being connected to said secondary battery.

According to the second request paragraph, there is a voltage regulator that regulates the output voltage of the electric double-layer capacitor, and a secondary battery that is connected to the electric double-layer capacitor via said voltage regulator, with the load being connected to said secondary battery. The secondary battery is charged by the electric power stored in the electric double-layer capacitor, and the load is supplied with electric power from said secondary battery. Therefore, electric power is maintained in a stable manner.

The voltage at the secondary battery that is charged by the electric double-layer capacitor should be adjusted in order to be used efficiently, because the voltage of the electric double-layer capacitor will definitely be reduced as the electrical double-layer capacitor is discharged. This is done by the voltage regulator.

When charging the secondary battery from the electric double-layer capacitor, it is better to keep the voltage of the electric double-layer capacitor only a little higher than that of the secondary battery, because if there is a big difference between the output voltage of the electric double-layer capacitor and the voltage of the secondary battery, excess current will flow.

The invention mentioned in Claim 3 is a sensor device provided with (1) a vibration-emitting device that emits vibrations through the air, (2) a response device that receives the vibration and transmits a response signal, and (3) a response-signal receiving device that receives a response signal and collates it, further characterized such that said response device has (a) a coupler that receives the vibrations emitted by said vibration-emitting device, (b) a response-signal generating circuit that generate said response signal, (c) a coupler that transmits said response signal, and (d) a power device as mentioned in the above first request paragraph and second request paragraph. Then power is supplied from said response-signal generating circuit in said power device.

In this way, according to the sensor device of this request paragraph, this response device has a sensor comprising a coupler for receiving the vibrations emitted by the vibration-emitting device, response signal-generating circuits, a coupler generating response signals, and an electricity-source device mentioned in either the above first or second request paragraph. Therefore, the response-signal-emitting circuit can be supplied with power from said electricity-source device, and it can be supplied with power over a long period of time because it uses the energy converted from vibrations transferred through space.

According to this invention, it is possible to avoid the inconvenience of the response device having a limited work-life because of the limited life of its battery, in the case of a response device that has a built-in nonrechargeable battery.

According to this invention, it is also possible to avoid the inconvenience of not being able to emit response signals because of a lack of power, which in the case of other inventions results because when vibrations are the source of electric energy the power stored in the capacitor will be consumed instantly and, therefore, when there occurs a loss of power in a circuit, the result will be the inconvenience of not being able to emit response signals due to a lack of power.

### Description of the Preferred Embodiment

The preferred embodiment of the present invention will be described below in detail.

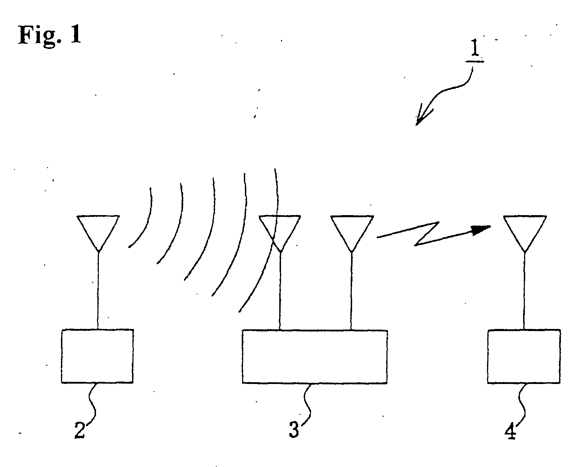

As shown in Fig. 1, the sensor device 1 of this example consists of a vibration-emitting device 2, which radiates vibrations through the air, a response device 3, which receives vibrations and transmits a response signal, and a response-signal receiving device 4, which receives and verifies the response signal. These are used in a door-lock release of an entrance control system.

In other words, the vibration-emitting device 2 always emits vibrations in the area near of the door, and a specified person carries the response device 3. If this person approaches the door, the response device 3 receives vibrations from the vibration-emitting device 2 and then transmits a response signal. The response-signal receiving device 4 that receives the response signal verifies the response signal. A door lock is opened when the response signal is verified.

The aforementioned vibration-emitting device 2 is equipped with a vibration-generating circuit 210 that creates vibrations and with a vibration-emitting antenna 220, which emits the vibrations.

Furthermore, the aforementioned response device 3 is equipped with a vibration-receiving coupler 310, response-signal-generating circuits 320, a response-signal-transmitting coupler 330, an electric-power-source device that supplies power to said response-signal-generating circuits 320, and a breaker device 350. In addition, there is a contact 351 of the breaker 350 and a diode 360 that prevents the currents from flowing reversely.

The structure of the response device 3 is such that (a) its power device stores electric power when its vibration-receiving coupler 310 receives vibration energy, (b) its response-signal-generating circuit 320 generates a response signal, using the electric power stored in said power device, and that (c) its response-signal-transmitting coupler 330 transmits said response signal that is generated by said response-signal-generating circuit 320.

Said power device comprises (a) an electric double-layer capacitor 341 that stores as electric power the vibration energy received by said vibration-receiving coupler 310, and (b) a voltage regulator 342 that regulates the voltage from said electric double-layer capacitor 341. The structure of said power device is such that the electric power stored in said electric double-layer capacitor 341 is supplied to said response-signal-generating circuit 320, while the electric power is being regulated by said voltage regulator 342.

Some electric charge will have been stored in the electric double-layer capacitor 341 due to vibrations being received in the vibration-receiving coupler 310. Further, this electric double-layer capacitor 341 has an enormously larger static capacitance than other general capacitors, which discharge electric power instantly. The electric double-layer capacitor 341 will accumulate said vibrations as electric power.

In particular, said electric double-layer capacitor 341 has a thin, laminate-type shape of 26 mm x 50 mm in size and 2 mm in thickness; has capacitance of 0.1 farads and usage voltage of 5 volts. and is designed such that even when its capacitance level is zero, it can be fully charged by receiving vibration energy for approximately one second. In addition, when said electric double-layer capacitor 341 has been fully charged, electrical power can be supplied for at least 4―6 seconds at a constant voltage to said response-signal-generating circuit 320.

When the electric double-layer capacitor 341 has been fully charged, said breaker device 350 serves to cut the connection between the vibration-receiving coil 310 and the electric double-layer capacitor 341. The breaker device 350 is operated by a signal from the response-signal-generating circuit 320, and said breaker device 350 can also send back the signal to the response-signal-generating circuit 320.

Further, said response-signal receiving device 4 has both a response-signal receiving coupler 420 that receives a response signal generated from the response device 3, and a response-signal sensor circuit 410.

It also is possible for both the vibration-emission coupler 220 (of the vibration-emitting device 2) and the response-signal receiving coupler 420 (of the response-signal receiving device 4) share (i.e., use in common) the came coupler (coil). That is, both the vibration-emitting circuit 210 and the response-signal sensor circuit 410 can be connected to one coupler, which will be used by the former device (210) when vibration is emitted, and by the latter device (410) when the response signal is received.

According to this structure, the response device 3 can both generate a response signal and use the electric source without being replaced for a very long period of time. As a result, the reliability of the entrance control system id greatly increased.

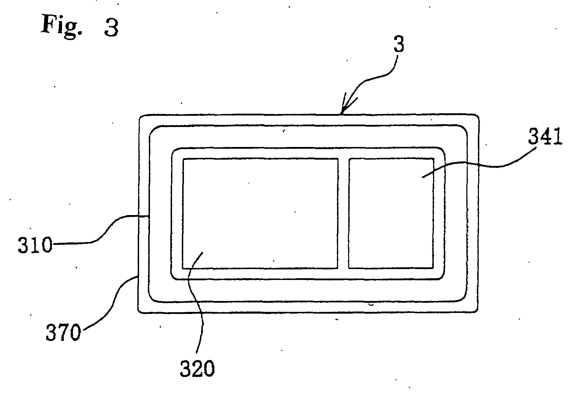

Fig. 3 shows the location of the response device.

The response device 3, which is shown in figure 3, is formed in a thin card-shape, and then the response-signal-generating circuit 320, which is an I-C chip, and the electric double-layer capacitor, which is about 1 mm thick and several cm in both width and length, are arranged on a circuit board made of plastic.

It is also possible to make the response signal-generating coupler 330 the same coupler as the vibration-receiving coupler 310, though usually the response signal-generating coupler 330 is located separately from the vibration-receiving coupler 310.

As mentioned above, according to this electricity-source device, electric power will be stable due to having both a coupler that receives vibrations transferred through the air and an electric double-layer capacitor that stores for a long time as electric power the vibrations received by said coupler.

This device can supply stable electric power to the load, because it is able to store a comparable rapid charge in the electric double-layer capacitor, and also able to store far more electric power than general capacitors, of several farads, which are instantly discharged.

Further, according to this sensor device, the response device has (1) a coupler that receives the vibrations emitted by the vibration-emitting device, (2) a response-signal generating circuit, (3) a coupler that generates a response signal, and (4) a electricity-source device that supplies power to the response-signal-generating circuit. Also, the electricity-source device is provided with the electric double-layer capacitor, which stores the electric power converted from the vibrations received by said coupler, as the energy source of the vibrations. Therefore, the response device can obtain constant electric power for a log period of time by utilizing the electric power converted from vibration energy.

According to this invention, it is possible to avoid the inconvenience of the response device having a limited work-life because of the limited life of its battery.

According to this invention, it also is possible to avoid the inconvenience of sometimes not being able to emit response signals at due to a lack of power, because, in the prior case of the vibration being an electric energy source, the power stored in the capacitor will be consumed instantly, with the result that when there is a loss of power in a circuit it will not be possible to emit response signals due to a lack of power.

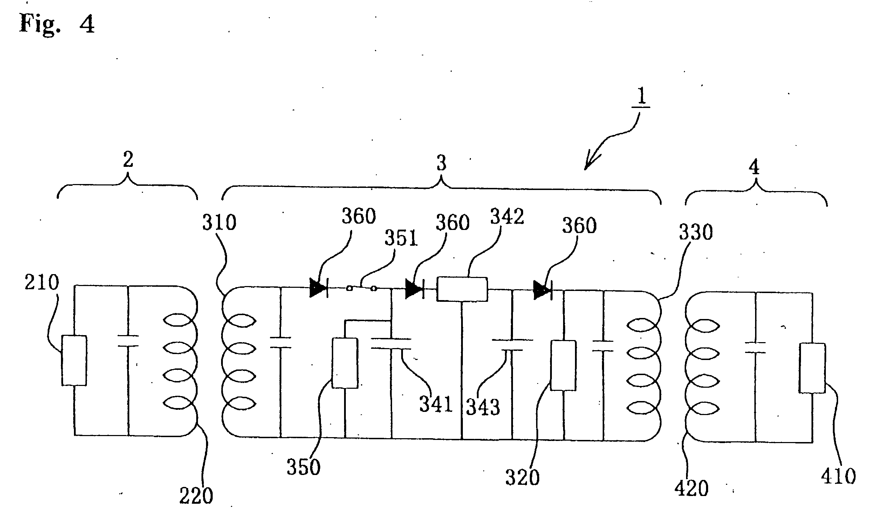

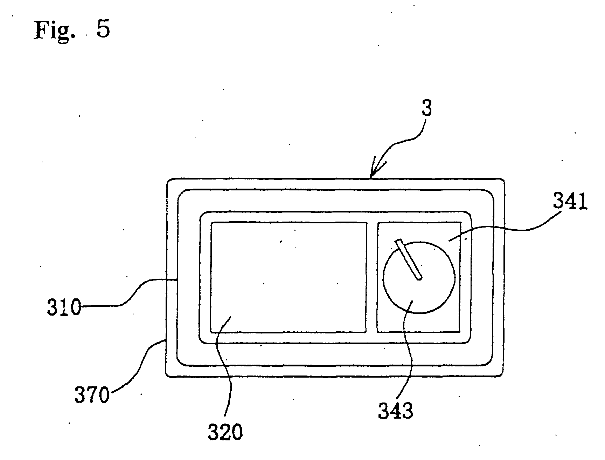

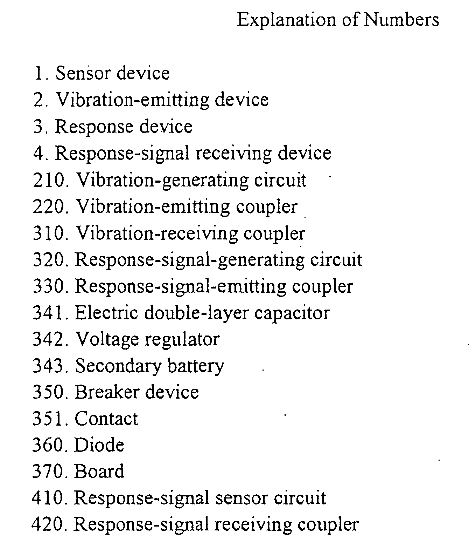

Followings are explanations based on Figures 4 and 5.

As shown in the drawings, the electricity-source device has a secondary battery 343 that is connected to the electric double-layer capacitor 341 via the voltage regulator 342, and further, said secondary battery 343 is connected to the response-signal-generating circuit 320. Because the other basic structure is the same as that explained above, the same number is used for parts that share the same function, and a detailed explanation is omitted here.

The electricity-source device has (1) a electric double-layer capacitor 341 that stores electric power converted by an energy coupler 310, (2) a voltage regulator 342, which adjusts the output voltage of the electric double-layer capacitor 341, and (3) a secondary battery 343 that is connected to said electric double-layer capacitor 341 via said voltage regulator 342. In addition, the said secondary battery 343 is further connected to the response-signal-generating circuit 320.

The secondary battery 343 is a rechargeable battery that is charged by the power stored in the electric double-layer capacitor 341.

A lead battery, a nickel-cadmium battery, a nickel-hydrogen battery, or a lithium battery can be used as the secondary battery 343.

The output voltage of the electric double-layer capacitor 341 will be maintained at a level higher than that of the secondary battery 343 due to the voltage regulator 342.

The voltage regulator 342 has been constructed by using a comparator, and the output of the electric double-layer capacitor 341 will be converted to a pulse state, after which the output will be in the form of a direct current for supplying power to the secondary battery 343, and usually the voltage of the voltage regulator 342 will be maintained at a level slightly higher than that of the secondary battery 343.

Therefore, the secondary battery 343 will be well-charged due to the power stored in the electric double-layer capacitor 341, and there will be stable power from the secondary battery 343 when a response signal is emitted the response-signal generating circuit 320.

As mentioned above, this power device provides stable power to the load because it has (1) a coupler that receives vibrations transferred through the air, (2) an electric double-layer capacitor that, due to said coupler, accumulates as electric power the aforementioned vibrations, (3) a power regulator that regulates the output voltage of said electric double-layer capacitor, and (4) a secondary battery that connects to the electric double-layer capacitor via said voltage regulator, and because it is possible to charge said secondary battery by using the power accumulated in the electric double-layer capacitor.

According to this sensor device, the response device has (1) a coupler that receives vibrations emitted by the vibration-emitting device, (2) a response-signal-generating circuit that generates a response signal, (3) a coupler that generates the response signal, and (4) a power device that supplies power to the response-signal-generating circuit. In addition, the power device is provided with the electric double-layer capacitor that stores as electric power the vibrations received by the coupler, the voltage regulator regulates the power of both the electric double-layer capacitor and the secondary battery that is connected to the electric double-layer capacitor via the voltage regulator, and, therefore, the response device can obtain stable power for a long time while using the aforementioned vibrations as the source of its electric energy.

### The Effects of the Invention

The invention mentioned in the first request paragraph is a power device that supplies power to a load and that has both a coupler that receives vibrations transferred through the air as well and an electric double-layer capacitor that accumulates as an electric power the vibrations received by said coupler, thereby making it possible to obtain stable power and to use the device for a long period of time due to using vibrations transferred through the air as the source of its energy.

The invention mentioned in the second request paragraph is a power device having a power regulator that regulates the output voltage of both an electric double-layer capacitor and a secondary battery that is connected to said electric double-layer capacitor via said power regulator, with the load being connected to said secondary battery. According to this structure, the secondary battery is charged from power stored in the electric double-layer capacitor, and the load is supplied with power by the secondary battery, as a result of which it maintains stable power for a long time.

The invention mentioned in the third request paragraph is a sensor device provided with a vibration-emitting device that emits vibrations through the air, a response device that receives the vibrations and transmits a response signal, and a response-signal receiving device that receives a response signal and collates it. Further, said response device has a coupler that receives the vibrations emitted by said vibration-emitting device, response-signal-generating circuits that generate the aforementioned response signal, a coupler that generates said response signal, and a power device mentioned in the above first and second request paragraphs, with electric power being supplied to the response-signal-generating circuit from the power device. Because, according to this structure, vibrations are used as the source of electric energy, the response device can remain in operation for a long period of time.

### Explanation of the Figures

Fig. 1. is a schematic view showing a sensor device of the present invention;

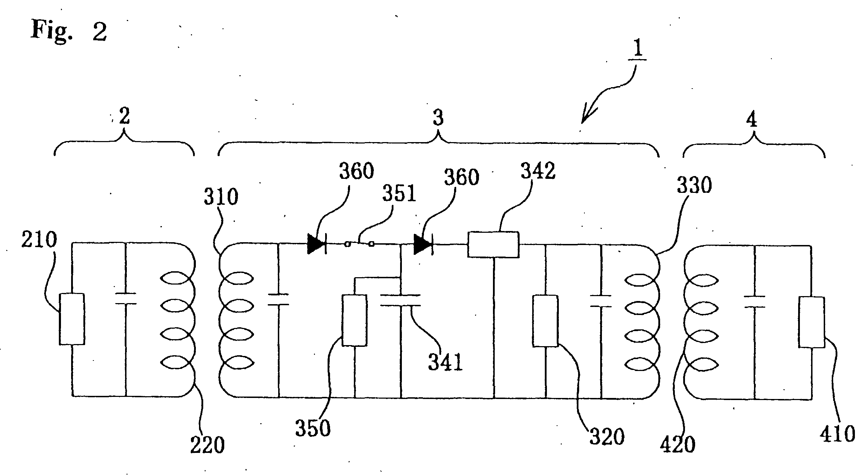

Fig. 2 is a circuit diagram showing a circuit of a sensor device of one embodiment of the present invention;
Fig. 3 is a schematic view showing the response device of Fig. 2;
Fig. 4 is a circuit diagram showing a circuit of a sensor device of another embodiment of the present invention; and
Fig. 5 is a schematic view showing the response device of Fig. 4.

## Claims

1. A power device that supplies power to a load, and comprises (a) a coupler that receives vibrations transferred through space, and (b) an electric double-layer capacitor that accumulates the energy of said vibrations, which is received as electric power by said coupler.

2. A power device as mentioned in Claim 1, and characterized such that it provides a power regulator that regulates the output voltage of both said electric double-layer capacitor and of a secondary battery that is connected to said electric double-layer capacitor via said power regulator, with a load being connected to said secondary battery.

3. A sensor device provided with a vibration-emitting device that emits vibrations through the air, a response device that receives the vibrations and transmits a response signal, and a response-signal receiving device that receives the response signal and collates it; further characterized such that said response device has a coupler that receives the vibrations emitted by said vibration-emitting device, response-signal-generating circuits that generate the aforementioned response signal, a coupler that generates said response signal, and a power device as mentioned in the above Claim 1 and/or Claim 2, with said response-signal-generating circuits being provided by said power device.
